# EUROPEAN PATENT APPLICATION

(11) **EP 4 621 724 A1**
(43) Date of publication of application: **24.09.2025**
(21) Application number: 23893077.0
(22) Date of filing: 08.06.2023
(51) Int. Cl.: G06T 19/00, G06F 16/958, G06F 3/01, G09B 9/00

(54) **AUGMENTED REALITY SIMULATION METHOD AND AR DEVICE**

(30) Priority: 22.11.2022 CN 202211473565
(71) Applicant: Huawei Cloud Computing Technologies Co., Ltd., Guiyang, Guizhou 550025 (CN)
(72) Inventor: SHAN, Weihua, Guiyang, Guizhou 550025 (CN); XUE, Xiaoliang, Guiyang, Guizhou 550025 (CN); DONG, Yang, Guiyang, Guizhou 550025 (CN)
(74) Representative: Körber, Martin Hans
(86) International application number: PCT/CN2023/099127
(87) International publication number: WO 2024/108977

(57) **Abstract**

The present invention discloses an augmented reality simulation method and an AR device. The method is as follows. The AR device obtains a real-world scene and physical information associated with a target object in the real-world scene, and determines first operation information of the target object based on the physical information associated with the target object, where the first operation information indicates a physical operation to be performed on the target object; and the AR device generates an AR scene based on the real-world scene and the first operation information, where the AR scene includes the first operation information. In this case, the first operation information in the real-world scene can be more accurately described based on the AR scene. Therefore, a more realistic scene can be present, and a more realistic AR simulation method is provided.

## Description

### CROSS-REFERENCE TO RELATED APPLICATIONS

This application claims priority to Chinese Patent Application No. 202211473565.2, filed with the China National Intellectual Property Administration on November 22, 2022 and entitled "AUGMENTED REALITY SIMULATION METHOD AND AR DEVICE", which is incorporated herein by reference in its entirety.

### TECHNICAL FIELD

This application relates to the field of computer technologies, and in particular, to an augmented reality simulation method and an AR device.

### BACKGROUND

In recent years, augmented reality (Augmented Reality, AR) technologies are gradually applied due to advantages of the augmented reality technologies: versatility, portability, and easy deployment. For example, the AR technologies may be applied to the sports industry, and a training assistance system may be obtained based on AR simulation. However, the training assistance system focuses more on simple result presentation and cannot accurately simulate a real-world scene. For example, a billiards training assistance system presents only a motion trajectory after a billiard ball is hit. After an athlete actually hits the billiard ball based only on the billiard ball motion trajectory, matching the motion trajectory is difficult.

Consequently, in a current AR simulation method, a real-world scene cannot be accurately reflected, and there is no more realistic AR simulation method.

### SUMMARY

This application provides an AR simulation method and an AR device, to accurately reflect a real-world scene.

According to a first aspect, an embodiment of this application provides an AR simulation method, where the method includes the following steps.

The AR device obtains a real-world scene and physical information associated with a target object in the real-world scene, and determines first operation information of the target object based on the physical information associated with the target object, where the first operation information indicates a physical operation to be performed on the target object; and the AR device generates an AR scene based on the real-world scene and the first operation information, where the AR scene includes the first operation information.

In the foregoing manner, in addition to obtaining the real-world scene, the AR device further obtains the physical information associated with the target object. Therefore, the AR device may determine the first operation information of the target object based on the physical information associated with the target object. In addition, the AR device may generate the AR scene based on the real-world scene and the first operation information, so that, in the AR scene, the AR device can indicate the target physical operation to be performed on the target object. In this case, the first operation information of the target object can be presented in the AR scene generated in the foregoing manner. Therefore, a more realistic scene can be reflected, and a more realistic AR simulation method is provided.

In a possible design, the determining first operation information of the target object based on the physical information associated with the target object includes:

The AR device determines N pieces of expected motion information based on the physical information associated with the target object and N pieces of candidate operation information, where the N pieces of candidate operation information are in one-to-one correspondence with the N pieces of expected motion information, and N is a positive integer greater than 1; and the AR device selects, from the N pieces of candidate operation information, corresponding candidate operation information of which expected motion information meets a specified condition as the first operation information.

In the foregoing manner, the AR device may determine the N pieces of expected motion information based on the N pieces of candidate operation information, to predict corresponding N motion cases of the N pieces of candidate operation information. Then, the AR device selects, from the N pieces of candidate operation information, the first operation information that meets the specified condition, so that flexibility of determining the first operation information can be improved.

In a possible design, the specified condition includes one or more of the following: an expected score obtained through single motion of the target object performed based on the expected motion information is the highest, an expected location at which the target object stays after completing single motion based on the expected motion information is within a specified space range, and a quantity of violated motion rules in single motion of the target object performed based on the expected motion information is the smallest.

In the foregoing manner, the specified condition provides one or more expected motion information strategies, so that the first operation information can be more accurately selected.

In a possible design, the determining first operation information of the target object based on the physical information associated with the target object includes: The AR device obtains expected motion information input by a user; and the AR device determines the first operation information based on the physical information associated with the target object and the expected motion information input by the user.

In the foregoing manner, the AR device may alternatively obtain the expected motion information input by the user, to determine the first operation information based on the expected motion information, so that the real-world scene can be more accurately reflected.

In a possible design, that the AR device generates an AR scene based on the real-world scene and the first operation information includes: The AR device generates the AR scene based on the real-world scene, the first operation information, and the expected motion information corresponding to the first operation information, where the AR scene further includes the expected motion information corresponding to the first operation information.

In the foregoing manner, in addition to the first operation information, the AR scene further includes the expected motion information corresponding to the first operation information, so that the real-world scene can be more accurately reflected.

In a possible design, the physical information associated with the target object includes at least one of the following: attribute information of the target object, force-bearing information of the target object, and attribute information of an object that the target object expects to touch.

In the foregoing manner, the physical information associated with the target object includes at least one of the foregoing items, so that the physical information associated with the target object can be more flexibly and accurately indicated, and the real-world scene can be more accurately reflected.

In a possible design, after that the AR device generates an AR scene based on the real-world scene and the first operation information, the method further includes: The AR device obtains second operation information indicating a physical operation actually performed by the user on the target object; and the AR device adjusts the AR scene based on the second operation information, where the AR scene includes the second operation information and/or third operation information, and the third operation information is obtained based on difference information between the second operation information and the first operation information.

In the foregoing manner, the AR device may further obtain the second operation information, so that an adjusted AR scene includes the second operation information and/or the third operation information. In this way, the real-world scene can be further accurately reflected.

In a possible design, the real-world scene is a billiards scene, the target object is a target billiard ball, and the first operation information indicates at least one of the following: a to-be-hit point of a cue on the target billiard ball, a to-be-hit force of the cue for the target billiard ball, and a to-be-hit direction of the cue for the target billiard ball.

In the foregoing manner, when the real-world scene is the billiards scene, any one of the foregoing items may be accurately described, so that the real billiards scene can be further accurately reflected.

According to a second aspect, an embodiment of this application provides an AR device. The AR device has functions of implementing the method example in the first aspect. For beneficial effects, refer to the descriptions of the first aspect. Details are not described herein again. The functions may be implemented by hardware, or may be implemented by hardware executing corresponding software. The hardware or the software includes one or more modules corresponding to the foregoing functions. In a possible design, a structure of the AR device includes an obtaining module and a processing module. These modules can perform corresponding functions in the method example in the first aspect. For details, refer to detailed descriptions in the method example. The details are not described herein again.

According to a third aspect, an embodiment of this application provides a computing device cluster. The computing device cluster includes at least one computing device. Each computing device includes a processor and a storage.

The processor of the at least one computing device is configured to execute instructions stored in the storage of the at least one computing device, to enable the computing device cluster to perform any possible method in the first aspect.

According to a fourth aspect, an embodiment of this application provides a computer program product including instructions. When the instructions are run by a computing device cluster, the computing device cluster is enabled to perform any possible method in the first aspect.

According to a fifth aspect, an embodiment of this application provides a computer-readable storage medium. The computer-readable storage medium includes computer program instructions. When the computer program instructions are executed by a computing device cluster, the computing device cluster is enabled to perform any possible method in the first aspect.

According to a sixth aspect, an electronic device is provided. The electronic device includes one or more processors and one or more storages. The one or more storages store one or more computer instructions. When the one or more computer instructions are executed by the one or more processors, the electronic device is enabled to perform the method according to any design of the first aspect.

According to a seventh aspect, this application provides a chip. The chip includes a processor. The processor is coupled to a storage, and is configured to read and execute a software program stored in the storage, to implement the method according to any design of the first aspect.

For beneficial effects of the second aspect to the seventh aspect, refer to the beneficial effects of the first aspect. Details are not described again.

### BRIEF DESCRIPTION OF DRAWINGS

FIG. 1a is a diagram of an architecture of an AR device to which an AR simulation method may be applied according to an embodiment of this application;
FIG. 1b is a diagram of a structure of AR glasses in an architecture of an AR device according to an embodiment of this application;
FIG. 1c is a diagram of a structure of a cloud server in an architecture of an AR device according to an embodiment of this application;
FIG. 2 is a diagram of a structure of an electronic device to which an AR simulation method may be applied according to an embodiment of this application;
FIG. 3 is a diagram of a scenario to which an AR simulation method may be applied according to an embodiment of this application;
FIG. 4 is a schematic flowchart of steps of an AR simulation method according to an embodiment of this application;
FIG. 5 is a diagram of an implementation effect of an AR simulation method according to an embodiment of this application;
FIG. 6 is a diagram of a structure of an AR device according to an embodiment of this application;
FIG. 7 is a diagram of a structure of an electronic device according to an embodiment of this application;
FIG. 8 is a diagram of a structure of a computing device according to an embodiment of this application;
FIG. 9 is a diagram of a structure of a computing device cluster according to an embodiment of this application; and
FIG. 10 is a diagram of a connection between computing devices in a computing device cluster according to an embodiment of this application.

### DESCRIPTION OF EMBODIMENTS

The following clearly and completely describes the technical solutions in embodiments of this application with reference to the accompanying drawings in embodiments of this application.

Terms used in the following embodiments are merely intended to describe specific embodiments, but are not intended to limit this application. The terms "one", "a" and "this" of singular forms used in this specification and the appended claims of this application are also intended to include expressions such as "one or more", unless otherwise specified in the context clearly. It should be further understood that, in embodiments of this application, "one or more" means one or more than two (including two); and the term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

In embodiments of this application, the term "a plurality of" means two or more. In view of this, in embodiments of this application, "a plurality of" may also be understood as "at least two". "At least one" may be understood as one or more, for example, one, two, or more. For example, including at least one means that one, two, or more are included, and there is no limitation on which is included. For example, if at least one of A, B, and C is included, A, B, C, A and B, A and C, B and C, or A, B, and C may be included. Similarly, understandings of descriptions such as "at least one" are also similar. The term "and/or" describes an association relationship between associated objects, and indicates that three relationships may exist. For example, A and/or B may indicate the following three cases: Only A exists, both A and B exist, and only B exists. In addition, the character "/" generally indicates an "or" relationship between the associated objects.

Unless otherwise specified, ordinal numbers such as "first" and "second" in embodiments of this application are used to distinguish between a plurality of obj ects, and are not intended to limit a sequence, a time sequence, priorities, or importance of the plurality of objects.

An AR technology is a technology of computing, in real time, a location and an angle of an image projected by an optical engine system (also referred to as a projector or an optical receiver/transmitter) and adding a corresponding image. The AR technology can be for embedding a virtual world into a real world on a screen and performing interaction. To be specific, physical information (like visual information, sound, or touch) that is difficult to experience in the real world within a time and space range can be simulated and then superimposed via a computer or the like, and virtual information is applied to the real world. Because the AR technology makes interaction between the virtual world and the real world possible, currently, the AR technology is widely applied to AR devices. In the AR device, a virtual image can be projected to human eyes, to implement superimposing of the virtual image and a real image. In recent years, the AR technology is gradually applied due to advantages of the AR technology: versatility, portability, and easy deployment. However, the AR technology cannot accurately simulate a real-world scene. Therefore, this application provides an AR simulation method, and the method may be applied to an AR device provided in this application.

There are a plurality of possible forms of the AR device provided in this application. This is not limited herein. For example, the AR device may be separated into AR glasses and a cloud server, or the AR device may be an independent electronic device. The following describes possible forms of the AR device by using the foregoing two cases as examples.

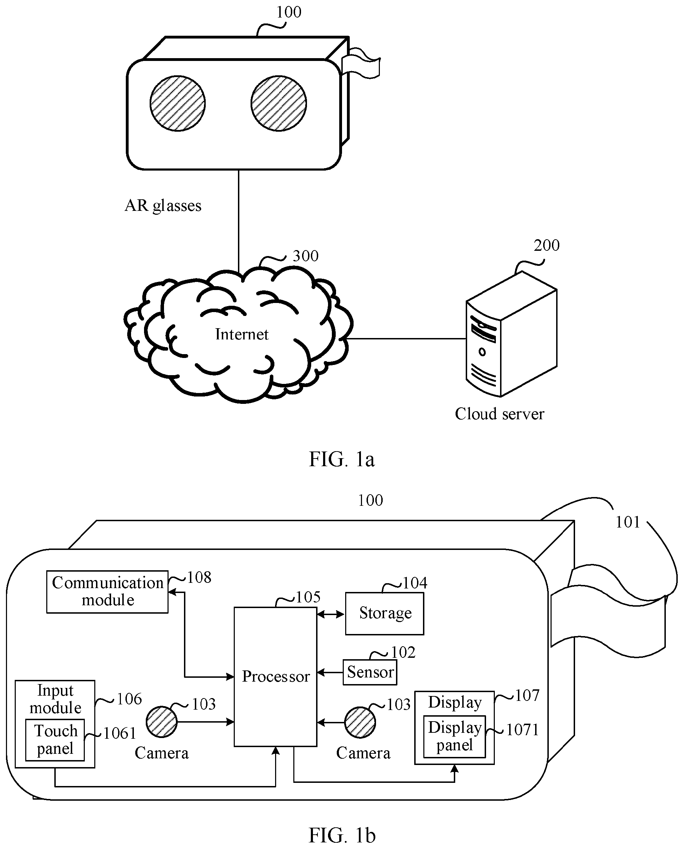

A case in which the AR device is AR glasses and a cloud server is shown in FIG. 1a to FIG. 1c, and details may be as follows.

As shown in FIG. 1a, the AR device includes AR glasses 100 and a cloud server 200. The AR glasses 100 and the cloud server 200 are connected over an internet 300.

As shown in FIG. 1b, the AR glasses 100 include a head-mounted apparatus 101, a sensor 102, cameras 103, a storage 104, a processor 105, an input module 106, a display 107, and a communication module 108. The head-mounted apparatus 101 may be a housing of the AR glasses 100. The head-mounted apparatus 101 is used by a user for wearing and is configured to fasten the AR glasses 100. The sensor 102, the cameras 103, the storage 104, the processor 105, the input module 106, the display 107, and the communication module 108 are disposed on the head-mounted apparatus 101. It should be noted that, a plurality of variants may be made to the AR device shown in FIG. 1b based on an actual requirement. FIG. 1b provides only one example. In some other examples, there may be more or fewer components than components shown in FIG. 1b, two or more components may be combined, or there may be different component configurations.

The AR glasses 100 may include one or more sensors 102, such as a light sensor, a motion sensor, an ultrasonic sensor, and another sensor. The sensor 102 is configured to collect real-time sensor data. For example, the motion sensor is configured to collect posture information of the AR glasses 100.

The camera 103 is configured to capture a real-world scene. The real-world scene may be one video frame or a video stream including a plurality of video frames. The AR glasses 100 may include a plurality of cameras 103. In FIG. 1b, two cameras are used as an example for description. These cameras 103 may include a front-facing camera located on a front side of the AR glasses 100, and may further include a camera located on a side of the AR glasses 100, and a rear-facing camera located on a rear side of the AR glasses 100, and the like. This is not limited herein.

The storage 104 may be configured to store a software program and data. The processor 105 may perform various functions of the AR glasses 100 and data processing by running the software program and the data that are stored in the storage 104. In embodiments of this application, the software program may include an AR simulation client program for implementing the AR simulation method.

The processor 105 may be configured to perform data processing based on the real-world scene and/or the real-time sensor data. For example, the processor 105 may be configured to identify a target object in the real-world scene, and obtain physical information of the target object based on an identifier (ID) of the target object and a physical information library. The processor 105 is a control center of the AR glasses 100. The control center connects various components through various interfaces and lines, and performs various functions of the AR glasses 100 and data processing by running or executing the software program stored in the storage 104 and/or a module and invoking the data stored in the storage 104, to implement a plurality of services of the AR glasses 100. For example, the processor 105 may run a client of an AR simulation program stored in the storage 104, to implement the AR simulation method provided in embodiments of this application.

Optionally, the processor 105 may include one or more processing units. The processor 105 may integrate an application processor, a modem processor, a baseband processor, a graphics processing unit (graphics processing unit, GPU), and the like. The application processor mainly processes an operating system, a user interface, an application program, and the like. The modem processor mainly processes wireless communication. It may be understood that the modem processor may not be integrated into the processor 105.

The input module 106 may be configured to receive character information and a signal that are input by the user. Optionally, the input module 106 may include a touch panel 1061 and another input device (for example, a function key). For example, if three types of expected motion information of the target object are displayed on the display 107, the user may select one piece of the expected motion information by using the function key. The touch panel 1061, also referred to as a touchscreen, may collect a touch operation performed by the user on or near the touch panel, generate corresponding touch information, and send the touch information to the processor 105, so that the processor 105 executes a command corresponding to the touch information. The touch panel 1061 may be implemented in a plurality of types such as a resistive type, a capacitive type, an infrared type, and a surface acoustic wave type.

The display 107 may be configured to present the user interface, to implement human-machine interaction. For example, information input by the user or information provided for the user, and content such as various menus, main interfaces (including icons of various applications), windows of various applications, the real-world scene shot by the camera, and an AR scene that are of the AR glasses may be displayed on the display 107.

The display 107 may include a display panel 1071. The display panel 1071 is also referred to as a display screen, and may be configured in a form of a liquid crystal display (liquid crystal display, LCD), an organic light-emitting diode (organic light-emitting diode, OLED), or the like.

It should be noted that the touch panel 1061 may cover the display panel 1071. In FIG. 1b, the touch panel 1061 and the display panel 1071 serve as two independent components to implement input and output functions of the AR glasses. However, in embodiments of this application, the touch panel 1061 and the display panel 1071 may be integrated (that is, a touch display screen) to implement the input and output functions of the AR glasses.

The communication module 108 is configured to perform data communication with the cloud server 200. For example, the communication module 108 is configured to send the real-world scene and the physical information to the cloud server 200 over the internet 300, and receive an AR scene from the cloud server 200.

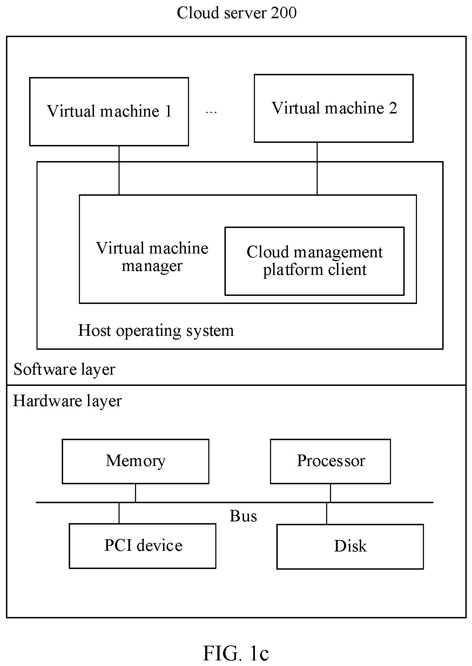

As shown in FIG. 1c, the cloud server 200 includes a hardware layer and a software layer, and the hardware layer is a conventional configuration of the server. The hardware layer includes a memory, a processor, a peripheral component interconnect (peripheral component interconnect, PCI) device, and a disk. The PCI device may be, for example, a device that can be inserted into a PCI/PCIe slot of the server, such as a network adapter, a graphics processing unit (graphics processing unit, GPU), or an offload card. The PCI device in the cloud server 200 may be configured to perform data transmission with the AR glasses 100 over the internet 300. For example, the PCI device may be configured to receive the real-world scene and the physical information from the AR glasses 100, and send the real-world scene and the physical information to the processor at the hardware layer. The processor at the hardware layer may generate the AR scene based on the real-world scene and the physical information, and send the AR scene to the PCI device at the hardware layer. The PCI device at the hardware layer may send the AR scene to the AR glasses 100 over the internet 300.

The software layer includes an operating system installed and running on the server (an operating system relative to a virtual machine may be referred to as a host operating system). A virtual machine manager (also referred to as a hypervisor) and a cloud management platform client are disposed in the host operating system. A function of the virtual machine manager is to implement computing virtualization, network virtualization, and storage virtualization of the virtual machine, and manage the virtual machine. The virtual machine (Virtual Machine, VM) is a complete computer system that is simulated by using software, has a complete hardware system function and runs in an entirely isolated environment. A tenant of the virtual machine can perform an operation on the virtual machine as the user does on the server. For example, the tenant of the virtual machine may be a vendor of the AR glasses 100. The vendor of the AR glasses 100 may install a service end of the AR simulation program on the virtual machine by performing an operation on the virtual machine, so that the virtual machine can run the service end of the AR simulation program, to implement the AR simulation method.

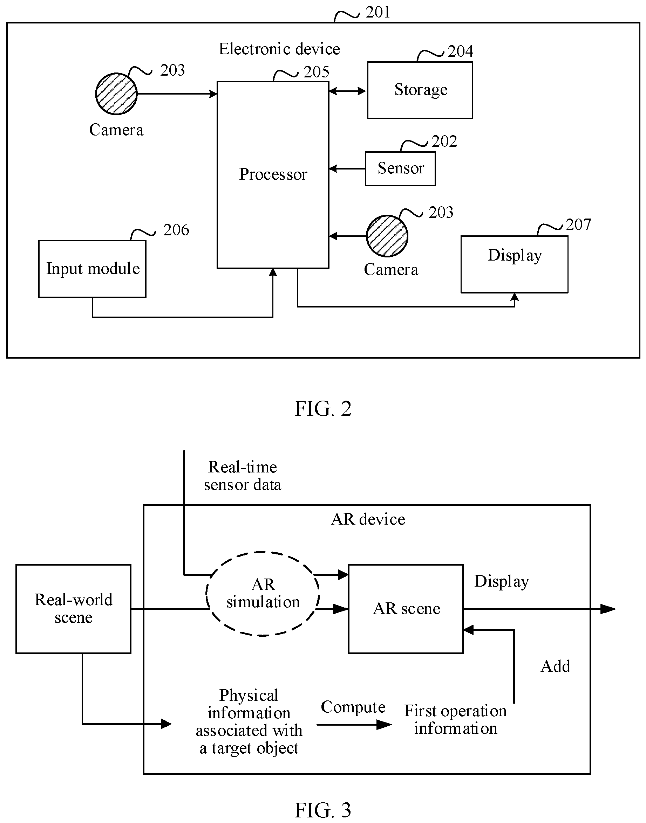

A case in which the AR device is an electronic device is shown in FIG. 2, and details may be as follows.

FIG. 2 shows a possible structure of the electronic device. Refer to FIG. 2. The electronic device 201 includes a sensor 202, cameras 203, a storage 204, a processor 205, an input module 206, a display 207, and the like. The following describes components of the electronic device 201 in detail with reference to FIG. 2. FIG. 2 provides only one example. In some other examples, there may be more or fewer components than the components shown in FIG. 2, two or more components may be combined, or there may be different component configurations.

The processor 205 may run an AR simulation program stored in the storage 204, and may generate an AR scene based on a real-world scene and physical information, to implement the AR simulation method provided in embodiments of this application. The electronic device shown in FIG. 2 may not include a communication module. The processor 205 may implement functions of the processor 105 of the AR glasses 100 and the processor of the cloud server. For details, refer to related descriptions in FIG. 1b. The details are not described herein again. Components such as the sensor 202, the cameras 203, the storage 204, the input module 206, and the display 207 may correspondingly implement functions of the sensor 102, the cameras 103, the storage 104, the input module 106, and the display 107 shown in FIG. 1b. Reference may be made to related descriptions in FIG. 1b. Details are not described herein again.

The electronic device 201 may alternatively include a communication module, to implement data communication with another device. For example, the communication module of the electronic device 201 may be configured to forward the AR scene generated by the electronic device 201 to another device. For details, refer to related descriptions of the communication module 108. The details are not described herein again.

A person skilled in the art may understand that the structure of the electronic device 201 shown in FIG. 2 does not constitute a limitation on an electronic device to which this application is applicable. The electronic device to which embodiments of this application are applicable may include more or fewer components than the components shown in the figure, may combine some components, or have different component arrangements.

The AR device shown in FIG. 1a to FIG. 1c or FIG. 2 may implement an AR simulation method provided in this application. An application scenario of the AR simulation method may be shown in FIG. 3. In the scenario shown in FIG. 3, an overall procedure may be as follows.

The AR device may obtain a real-world scene (like a billiards scene, a badminton scene, or a basketball scene) via a camera, or may obtain real-time sensor data (like posture information and spatial location information) via a sensor. The AR device may perform AR simulation based on the real-world scene and the real-time sensor data, to obtain an AR scene. A process of the AR simulation may be as follows. The AR device performs alignment between a coordinate system of the real-world scene and a coordinate system of a virtual scene based on the real-time sensor data, performs three-dimensional modeling on the virtual scene, and performs fusion computing between the virtual scene and the real-world scene, to obtain the AR scene. For a specific process, refer to conventional technologies of the AR simulation. Details are not described herein. It should be noted that the foregoing AR simulation scenario is merely an example. For example, the AR device may be fixed, and three-dimensional model information is preset in the AR device. In this case, the AR device may alternatively perform AR simulation based on the real-world scene without the real-time sensor data.

The process of the AR simulation may further include other steps. For example, the AR device may obtain physical information associated with a target object, determine first operation information of the target object based on the physical information associated with the target object, and add the first operation information to the AR scene. The first operation information indicates a physical operation to be performed on the target object. The first operation information may include a plurality of cases. For example, when the target object is a target billiard ball, the first operation information indicates at least one of the following: a to-be-hit point of a cue on the target billiard ball, a to-be-hit force of the cue for the target billiard ball, and a to-be-hit direction of the cue for the target billiard ball.

The physical information associated with the target object may include attribute information of the target object and attribute information of an object that the target object expects to touch. For example, in a billiards scene, expected motion information may be a motion trajectory of the target billiard ball from the target billiard ball being hit to the target billiard ball stopping moving, and physical information of a touched object may be physical information of a billiard table, a cue, and another billiard ball that the target billiard ball collides with. The physical information of the another billiard ball that the target billiard ball collides with may include at least one of the following: a volume of the billiard ball, density of the billiard ball, an elastic coefficient of the billiard ball, and color of the billiard ball. It should be noted that, the listed several attributes are merely examples of the physical information of the listed object, and is not limited to the physical information. The physical information associated with the target object may further include force-bearing information of the target object, for example, information about gravity, an elastic force, and friction applied to the target object.

The AR device may obtain, based on the real-world scene, the physical information associated with the target object. A specific process may be as follows. The AR device identifies the target object in the real-world scene, and obtains the physical information of the target object based on an identifier (ID) of the target object and a physical information library. The physical information library includes physical information of a plurality of objects. For example, when the object is a billiard ball, physical information of the billiard ball may include at least one of the following: a volume of the billiard ball, density of the billiard ball, an elastic coefficient of the billiard ball, color of the billiard ball, and a number of the billiard ball. The physical information library may further include physical information of another object. For example, physical information of a billiard table may include at least one of the following: a material of the billiard table, an area of the billiard table, and a height of the billiard table. Physical information of a cue may include at least one of the following: a length of the cue, a head area of the cue, and mass of the cue.

A process in which the AR device obtains the first operation information may be as follows. The AR device may determine the first operation information based on the physical information associated with the target object and expected motion information of the target object. In other words, the AR device may deduce, based on the physical information associated with the target object, a physical operation that can cause the target object to move based on the expected motion information.

The AR scene displayed in FIG. 3 may be an AR scene including the first operation information, or may be an AR scene not including the first operation information. A specific display setting may be designed based on an actual requirement.

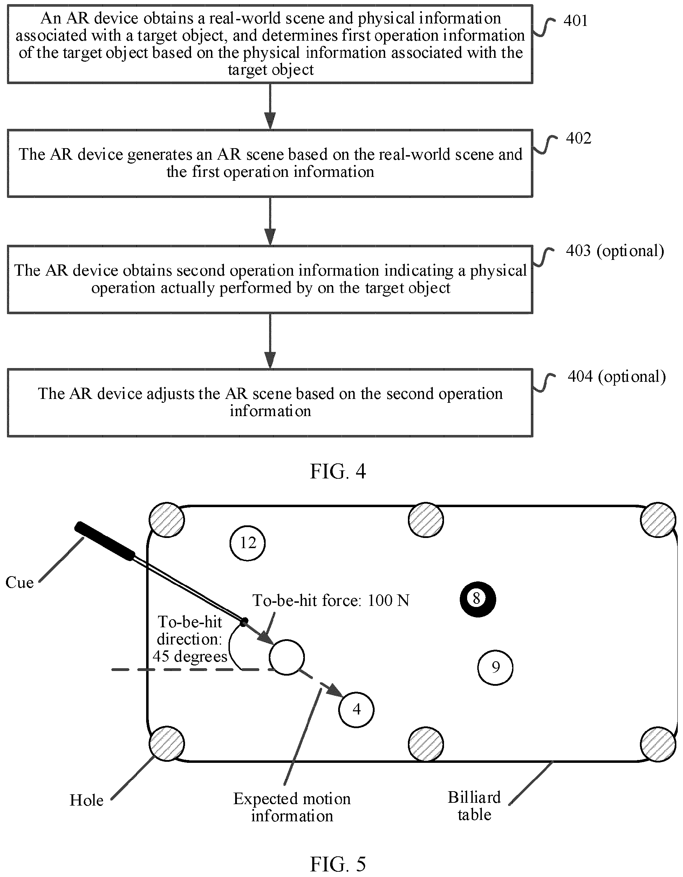

The following describes an AR motion simulation method according to an embodiment of this application in detail with reference to FIG. 4.

Step 401: An AR device obtains a real-world scene and physical information associated with a target object in the real-world scene, and determines first operation information of the target object based on the physical information associated with the target object.

Step 402: The AR device generates an AR scene based on the real-world scene and the first operation information.

The first operation information indicates a physical operation to be performed on the target object.

Step 403: The AR device obtains second operation information indicating a physical operation actually performed by a user on the target object.

Step 404: The AR device adjusts the AR scene based on the second operation information.

The AR scene includes the second operation information and/or third operation information, and the third operation information is obtained based on difference information between the second operation information and the first operation information.

Because the AR device has a plurality of possible cases, execution of step 401 to step 404 may also have a plurality of cases. For example, in a case in which the AR device includes AR glasses and a cloud server, step 401 and step 403 may be performed by the AR glasses, and step 402 and step 404 may be performed by the cloud server. In a case in which the AR device is an independent electronic device, step 401 to step 404 may all be performed by the AR device shown in FIG. 2.

The real-world scene mentioned in step 401 to step 404 may be captured by a camera of the AR device, and the real-world scene may be one video frame or a video stream including a plurality of video frames within a preset space range. For example, the real-world scene is a billiards scene, the preset space range is a room, and there is a billiard table, a billiard ball, and a cue in the room. In this case, the billiards scene may be a video frame or video stream of the billiard table, the billiard ball, and the cue shot by the camera of the AR device. For descriptions of the physical information associated with the target object, refer to related descriptions of the scene shown in FIG. 3. Details are not described herein again.

A possible case of determining the first operation information is as follows.

The AR device determines N pieces of expected motion information based on the physical information associated with the target object and N pieces of candidate operation information, and selects, from the N pieces of candidate operation information, corresponding candidate operation information of which expected motion information meets a specified condition as the first operation information. The N pieces of candidate operation information are in one-to-one correspondence with the N pieces of expected motion information, and N is a positive integer greater than 1.

It should be noted that different candidate operation information may correspond to different expected motion information. For example, the candidate operation information may be a to-be-hit force, a to-be-hit point, and a to-be-hit direction. The expected motion information corresponding to the candidate operation information may include: a motion trajectory formed through motion of a target billiard ball performed after the target billiard ball is hit based on the candidate operation information. The expected motion information corresponding to the candidate operation information may further include billiard ball collision information and goal information of the target billiard ball that are in the motion trajectory formed through the motion of the target billiard.

For another example, in a basketball scene, there is no collision between a basketball and another ball in a motion process. N motion trajectories of the basketball may be determined based on physical information of the basketball and the N pieces of candidate operation information.

In the foregoing case, the first operation information is selected from the N pieces of candidate operation information by using the specified condition. The specified condition may include one or more of the following:
an expected score obtained through single motion of the target object performed based on the expected motion information is the highest, an expected location at which the target object stays after completing single motion based on the expected motion information is within a specified space range, and a quantity of violated motion rules in single motion of the target object performed based on the expected motion information is the smallest.

A case in which the expected score obtained through single motion of the target object performed based on the expected motion information is the highest may be as follows.

For example, in a billiards scene, if a quantity of goals obtained through motion of a target billiard ball performed based on a trajectory corresponding to the first operation information is the largest, an obtained expected score is the highest. For example, in a basketball scene, the target object is a target basketball, and a goal score for a shooting trajectory corresponding to the first operation information of the target basketball is 3.

A case in which the expected location at which the target object stays after completing single motion based on the expected motion information is within the specified space range may be as follows.

For example, in a billiards scene, a target billiard ball can move within a range of 10 cm away from a hole based on a trajectory corresponding to the first operation information. For example, in a football scene, the target object is a target football, and a landing point of the target football is located within 1 m away from a goal area based on a football trajectory corresponding to the first operation information.

A case in which the quantity of violated motion rules in single motion of the target object performed based on the expected motion information is the smallest may be as follows.

For example, in a billiards scene, hitting a black ball into a hole violates a motion rule, and hitting a ball out of a billiard table also violates the motion rule. The target billiard ball moving based on a trajectory corresponding to candidate operation information A1 neither causes hitting the black ball into the hole nor causes hitting the ball out of the billiard table. The target billiard ball moving based on a trajectory corresponding to candidate operation information B1 causes hitting the black ball into the hole, but does not cause hitting the ball out of the billiard table. The target billiard ball moving based on a trajectory corresponding to candidate operation information C1 does not cause hitting the black ball into the hole, but causes hitting the ball out of the billiard table. Therefore, in the billiards scene, the candidate operation information A1 is the first operation information.

For example, in a badminton scene, if the target object is a shuttlecock, hitting the shuttlecock out of a badminton court or against a badminton net violates a motion rule. The shuttlecock moving based on a trajectory corresponding to candidate operation information A2 neither causes hitting the shuttlecock out of the badminton court nor causes hitting the shuttlecock against the badminton net. The shuttlecock moving based on a trajectory corresponding to candidate operation information B2 causes hitting the shuttlecock out of the badminton court but does not cause hitting the shuttlecock against the badminton net. The shuttlecock moving based on a trajectory corresponding to candidate operation information C2 does not cause hitting the shuttlecock out of the badminton court but causes hitting the shuttlecock against the badminton net. Therefore, in the badminton scene, the candidate operation information A2 is the first operation information.

Another possible case of determining the first operation information is as follows.

The AR device obtains expected motion information input by the user, and the AR device determines the first operation information based on the physical information associated with the target object and the expected motion information input by the user.

For example, the user may input the expected motion information by using a function button of the AR device.

The foregoing descriptions merely show some possible cases of determining the first operation information, and there are still a plurality of implementations of determining the first operation information. For example, the first operation information may alternatively be determined by randomly selecting from N pieces of candidate operation information. Alternatively, a mapping relationship between the N pieces of candidate operation information and an attribute value of the physical information may be specified in advance, and the first operation information may be determined from the N pieces of candidate operation information based on the mapping relationship. The first operation information may alternatively be specified operation information. A specific implementation of determining the first operation information is not limited herein.

In a possible case of step 402, the AR scene includes the first operation information and the target object, and the first operation information and the target object may be superimposed. For example, in a billiards scene, the first operation information may be attached to a target billiard ball. The first operation information indicates at least one of the following: a to-be-hit point of a cue on the target billiard ball, a to-be-hit force of the cue for the target billiard ball, and a to-be-hit direction of the cue for the target billiard ball.

Another possible case of step 402 may be as follows.

The AR device generates the AR scene based on the real-world scene, the first operation information, and the expected motion information corresponding to the first operation information, where the AR scene further includes the expected motion information corresponding to the first operation information. For example, in a billiards scene, a to-be-hit force and a to-be-hit direction may be attached to a target billiard ball, expected motion information (for example, an expected motion trajectory) of billiard ball motion may be attached to a billiard table, and speed information of some points in the expected motion trajectory and the like may also be attached. This is not limited herein.

In step 402, other information may further be included in the AR scene. For example, material information of the billiard table may be attached to the billiard table, and a magnitude of friction between the billiard ball and the billiard table may also be attached to the billiard table. In this way, a quantized real world is presented to the user, to facilitate the user understandings and operations and implement targeted training. A billiards scene is used as an example, an implementation effect of the billiards scene may be shown in FIG. 5.

Step 403 and step 404 are optional steps. The AR device may further obtain the second operation information indicating the physical operation actually performed by the user on the target object. For example, in a billiards scene, the AR device may collect, via a sensor, a hit force of a cue for a target billiard ball and an included angle between the cue and a table edge of a billiard table.

For example, the first operation information includes: a magnitude of the to-be-hit force for the target billiard ball is 100 N, and a to-be-hit angle for the target billiard ball is a 45-degree included angle between the cue and the table edge of the billiard table. In this case, the first operation information may indicate the user to hit the target billiard ball based on the force of 100 N and the 45-degree included angle between the cue and a desktop of the billiard table. There may be a deviation between the second operation information of the user and the first operation information. For example, the second operation information includes: a magnitude of the hit force for the target billiard ball is 120 N, and a hit angle for the target billiard ball is a 50-degree included angle between the cue and the table edge of the billiard table.

In this case, the AR device may further adjust the AR scene based on the second operation information.

The second AR scene may include the second operation information and/or the third operation information, and the third operation information is obtained based on the difference information between the second operation information and the first operation information. The third operation information may be obtained based on a difference between the pieces of information in the second operation information and the pieces of corresponding information in the first operation information. For example, the third operation information includes: the hit force for the target billiard ball in the second operation information being 20 N greater than that in the first operation information; and the hit angle for the target billiard ball, which is the included angle between the cue and the table edge of the billiard table, in the second operation information being 5 degrees greater than that in the first operation information.

In the foregoing AR simulation method, the first operation information of the target object may be determined by obtaining the physical information associated with the target object, and the first operation information is displayed in the AR scene, so that a requirement of the general public for an intelligent sports teaching assistance system can be met. The AR simulation method provided in this application can help professional athletes achieve higher-level and highly refined sports training. In addition, the AR simulation method provided in this application accelerates innovation of the sports industry in terms of content, a form, a manner, and means, or the like, for example, scenarios such as training assistance, onsite reset, a referee assistant, virtual rebroadcasting, live broadcast and snapshotting, a virtual battle, and a remote battle. In this way, the AR simulation method provided in this application may present the first operation information of the target object. Therefore, a more realistic scene can be reflected, and a more realistic AR simulation method is provided.

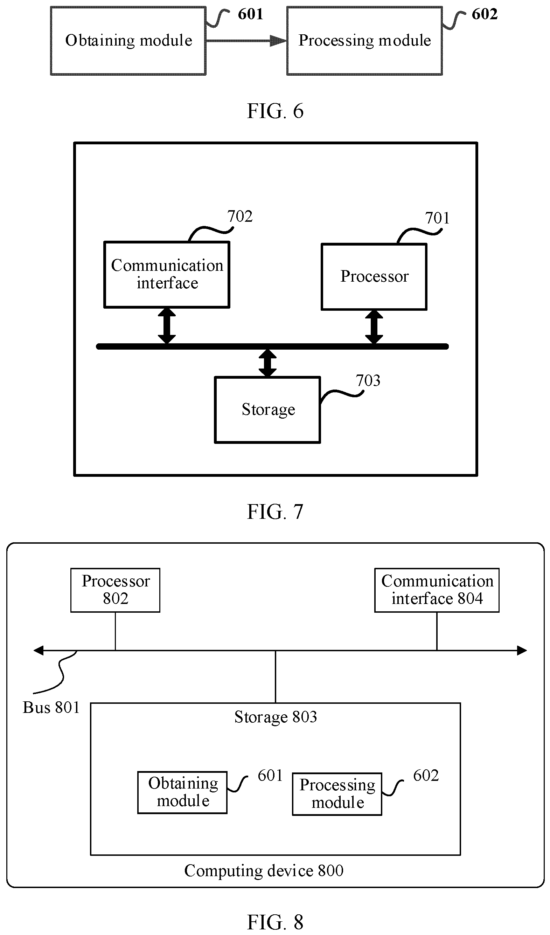

Based on a same technical concept as the foregoing AR simulation method, an embodiment of this application further provides an AR device. The AR device may be configured to perform the AR simulation method shown in FIG. 3. As shown in FIG. 6, the AR device includes an obtaining module 601 and a processing module 602. The modules may be implemented by software, or may be implemented by hardware executing corresponding software. Specifically, in the AR device, a connection between modules may be established through a communication path.

The obtaining module 601 is configured to: obtain a real-world scene and physical information associated with a target object in the real-world scene, and determine first operation information of the target object based on the physical information associated with the target object, where the first operation information indicates a physical operation to be performed on the target object.

The processing module 602 is configured to generate an AR scene based on the real-world scene and the first operation information, where the AR scene includes the first operation information.

In a possible case, the processing module 602 is specifically configured to:
determine N pieces of expected motion information based on the physical information associated with the target object and N pieces of candidate operation information, where the N pieces of candidate operation information are in one-to-one correspondence with the N pieces of expected motion information, and N is a positive integer greater than 1; and select, from the N pieces of candidate operation information, corresponding candidate operation information of which expected motion information meets a specified condition as the first operation information.

In a possible case, the specified condition includes one or more of the following: an expected score obtained through single motion of the target object performed based on the expected motion information is the highest, an expected location at which the target object stays after completing single motion based on the expected motion information is within a specified space range, and a quantity of violated motion rules in single motion of the target object performed based on the expected motion information is the smallest.

In a possible case, the obtaining module 601 is further configured to obtain expected motion information input by a user; and the processing module 602 is further configured to determine the first operation information based on the physical information associated with the target object and the expected motion information input by the user.

In a possible case, the processing module 602 is specifically configured to generate the AR scene based on the real-world scene, the first operation information, and the expected motion information corresponding to the first operation information, where the AR scene further includes the expected motion information corresponding to the first operation information.

In a possible case, the physical information associated with the target object includes at least one of the following: attribute information of the target object, force-bearing information of the target object, and attribute information of an object that the target object expects to touch.

In a possible case, the obtaining module 601 is further configured to obtain second operation information indicating a physical operation actually performed by the user on the target object; and the processing module 602 is further configured to adjust the AR scene based on the second operation information, where the AR scene includes the second operation information and/or third operation information, and the third operation information is obtained based on difference information between the second operation information and the first operation information.

In a possible case, the real-world scene is a billiards scene, the target object is a target billiard ball, and the first operation information indicates at least one of the following: a to-be-hit point of a cue on the target billiard ball, a to-be-hit force of the cue for the target billiard ball, and a to-be-hit direction of the cue for the target billiard ball.

An embodiment of this application further provides an electronic device. The electronic device may have a structure shown in FIG. 7. The electronic device may be a computer device, or may be a chip or a chip system that can support a computer device in implementing the foregoing method.

The electronic device shown in FIG. 7 may include at least one processor 701. The at least one processor 701 is configured to: be coupled to a storage, and read and execute instructions in the storage to implement the steps in the augmented reality simulation method provided in embodiments of this application. Optionally, the electronic device may further include a communication interface 702, configured to support the electronic device in receiving or sending signaling or data. The communication interface 702 in the electronic device may be configured to interact with another electronic device. The processor 701 may be configured to implement the steps in the method shown in FIG. 4 performed by the electronic device. Optionally, the electronic device may further include a storage 703. The storage 703 stores computer instructions. The storage 703 may be coupled to the processor 701 and/or the communication interface 702, and is configured to support the processor 701 in invoking the computer instructions in the storage 703 to implement the steps in the method shown in FIG. 4. In addition, the storage 703 may be further configured to store data in method embodiments of this application, for example, configured to store data and instructions that are required for supporting the communication interface 702 in interaction, and/or configured to store configuration information required for the electronic device to perform the method in embodiments of this application.

This application further provides a computing device 800. As shown in FIG. 8, the computing device 800 includes a bus 801, a processor 802, a storage 803, and a communication interface 804. The processor 802, the storage 803, and the communication interface 804 communicate with each other through the bus 801. The computing device 800 may be a server or a terminal device. It should be understood that quantities of processors and storages in the computing device 800 are not limited in this application.

The bus 801 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one line is for representing the bus in FIG. 8, but it does not mean that there is only one bus or only one type of bus. The bus 801 may include a path for transmitting information between components (for example, the storage 803, the processor 802, and the communication interface 804) of the computing device 800.

The processor 802 may include any one or more of processors, such as a central processing unit (central processing unit, CPU), a graphics processing unit (graphics processing unit, GPU), a microprocessor (microprocessor, MP), or a digital signal processor (digital signal processor, DSP).

The storage 803 may include a volatile memory (volatile memory), for example, a random access memory (random access memory, RAM). The processor 802 may further include a non-volatile memory (non-volatile memory), for example, a read-only memory (read-only memory, ROM), a flash memory, a hard disk drive (hard disk drive, HDD), or a solid-state drive (solid-state drive, SSD).

The storage 803 stores executable program code, and the processor 802 executes the executable program code to separately implement functions of the obtaining module 601 and the processing module 602, to implement the AR simulation method provided in embodiments of this application. That is, the storage 803 stores instructions used to perform the AR simulation method provided in embodiments of this application.

The communication interface 804 uses a transceiver module, for example, but not limited to, a network interface card or a transceiver, to implement communication between the computing device 800 and another device or a communication network.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

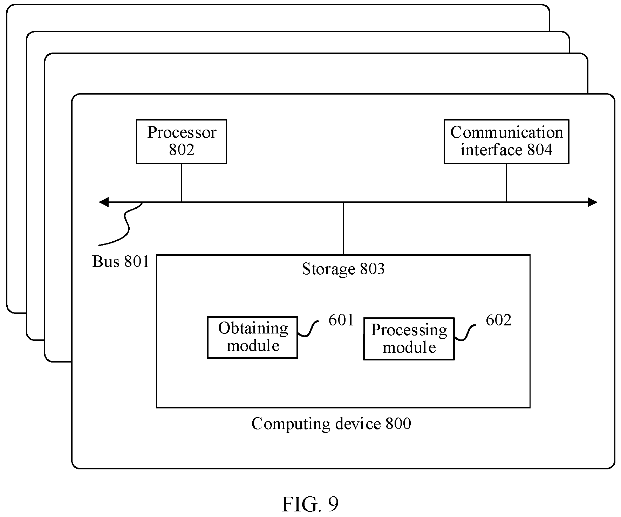

As shown in FIG. 9, the computing device cluster includes at least one computing device 800. A storage 803 in one or more computing devices 800 in the computing device cluster may store same instructions used to perform the AR simulation method provided in embodiments of this application.

In some possible implementations, a storage 803 in one or more computing devices 800 in the computing device cluster may alternatively separately store some instructions used to perform the AR simulation method provided in embodiments of this application. In other words, a combination of the one or more computing devices 800 may jointly execute instructions used to perform the AR simulation method provided in embodiments of this application.

It should be noted that, storages 803 in different computing devices 800 in the computing device cluster may store different instructions, and are separately configured to perform the functions of the obtaining module 601 and the processing module 602. In other words, the instructions stored in the storages 803 in different computing devices 800 may implement functions of one or more of the obtaining module 601 and the processing module 602.

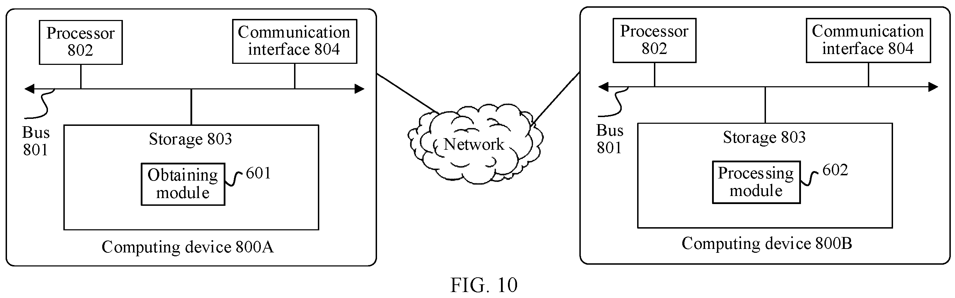

In some possible implementations, the one or more computing devices in the computing device cluster may be connected through a network. The network may be a wide area network, a local area network, or the like. FIG. 10 shows a possible implementation. As shown in FIG. 10, two computing devices 800A and 800B are connected through a network. Specifically, each computing device is connected to the network through a communication interface of the computing device. In this possible implementation, a storage 803 in the computing device 800A stores instructions for performing functions of the obtaining module 601. In addition, a storage 803 in the computing device 800B stores instructions for performing functions of the processing module 602.

In a connection manner between computing device clusters shown in FIG. 10, the functions implemented by the obtaining module 601 may be performed by the computing device 800A. Therefore, it is considered that the functions implemented by the processing module 602 are performed by the computing device 800B.

It should be understood that functions of the computing device 800A shown in FIG. 10 may alternatively be completed by a plurality of computing devices 800. Similarly, functions of the computing device 800B may alternatively be completed by the plurality of computing devices 800.

An embodiment of this application further provides another computing device cluster. For a connection relationship between computing devices in the computing device cluster, refer to the connection manner of the computing device cluster in FIG. 10 similarly. A difference lies in that a storage 803 in one or more computing devices 800 in the computing device cluster may store same instructions used to perform the AR simulation method provided in embodiments of this application.

In some possible implementations, a storage 803 in one or more computing devices 800 in the computing device cluster may alternatively separately store some instructions used to perform the AR simulation method provided in embodiments of this application. In other words, a combination of the one or more computing devices 800 may jointly execute instructions used to perform the AR simulation method provided in embodiments of this application.

An embodiment of this application further provides a computer program product including instructions. The computer program product may be a software or program product that includes instructions and that can run on a computing device or be stored in any usable medium. When the computer program product runs on at least one computing device, the at least one computing device is enabled to perform the AR simulation method provided in embodiments of this application.

An embodiment of this application further provides a computer-readable storage medium. The computer-readable storage medium may be any usable medium that can be stored by a computing device, or a data storage device, like a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions. The instructions instruct the computing device to perform the AR simulation method provided in embodiments of this application.

An embodiment of this application further provides a chip. The chip may include a processor. The processor is coupled to a storage, and is configured to read and execute a software program stored in the storage, to complete the method in any one of the foregoing method embodiments or the possible implementations of the method embodiments. "Coupling" means that two components are directly or indirectly combined with each other, and the combination may be fixed or mobile.

All or some of the foregoing embodiments may be implemented by using software, hardware, firmware, or any combination thereof. When the software is used to implement the foregoing embodiments, all or some of the foregoing embodiments may be implemented in a form of computer instructions. When the computer instructions are loaded and executed on a computer, the procedure or functions according to embodiments of the present invention are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber) or wireless (for example, infrared, microwave, or the like) manner. The computer-readable storage medium may be any usable medium accessible by the computer, or a data storage device, like a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (Solid-State Disk, SSD)), or the like.

Steps of the methods or algorithms described in embodiments of this application may be directly embedded into hardware, a software unit executed by a processor, or a combination thereof. The software unit may be stored in a RAM memory, a flash memory, a ROM memory, an EPROM memory, an EEPROM memory, a register, a hard disk, a removable magnetic disk, a CD-ROM, or a storage medium of any other form in the art. For example, the storage medium may be connected to a processor, so that the processor can read information from the storage medium and write information to the storage medium. Optionally, the storage medium may be integrated into a processor. The processor and the storage medium may be disposed in an ASIC, and the ASIC may be disposed in a terminal device. Optionally, the processor and the storage medium may be disposed in different components of a terminal device.

These computer instructions may alternatively be loaded to a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

## Claims

1. An augmented reality simulation method, wherein the method is applied to an augmented reality AR device, and the method comprises:
obtaining, by the AR device, a real-world scene and physical information associated with a target object in the real-world scene, and determining first operation information of the target object based on the physical information associated with the target object, wherein the first operation information indicates a physical operation to be performed on the target object; and
generating, by the AR device, an AR scene based on the real-world scene and the first operation information, wherein the AR scene comprises the first operation information.

2. The method according to claim 1, wherein the determining first operation information of the target object based on the physical information associated with the target object comprises:
determining, by the AR device, N pieces of expected motion information based on the physical information associated with the target object and N pieces of candidate operation information, wherein the N pieces of candidate operation information are in one-to-one correspondence with the N pieces of expected motion information, and N is a positive integer greater than 1; and
selecting, by the AR device from the N pieces of candidate operation information, corresponding candidate operation information of which expected motion information meets a specified condition as the first operation information.

3. The method according to claim 2, wherein the specified condition comprises one or more of the following:
an expected score obtained through single motion of the target object performed based on expected motion information is the highest;
an expected location at which the target object stays after completing single motion based on the expected motion information is within a specified space range; and
a quantity of violated motion rules in single motion of the target object performed based on the expected motion information is the smallest.

4. The method according to claim 1, wherein the determining first operation information of the target object based on the physical information associated with the target object comprises:
obtaining, by the AR device, expected motion information input by a user; and
determining, by the AR device, the first operation information based on the physical information associated with the target object and the expected motion information input by the user.

5. The method according to any one of claims 1 to 4, wherein the generating, by the AR device, an AR scene based on the real-world scene and the first operation information comprises:
generating, by the AR device, the AR scene based on the real-world scene, the first operation information, and the expected motion information corresponding to the first operation information, wherein the AR scene further comprises the expected motion information corresponding to the first operation information.

6. The method according to any one of claims 1 to 5, wherein the physical information associated with the target object comprises at least one of the following: attribute information of the target object, force-bearing information of the target object, and attribute information of an object that the target object expects to touch.

7. The method according to any one of claims 1 to 6, wherein after the generating, by the AR device, an AR scene based on the real-world scene and the first operation information, the method further comprises:
obtaining, by the AR device, second operation information indicating a physical operation actually performed by the user on the target object; and
adjusting, by the AR device, the AR scene based on the second operation information, wherein the AR scene comprises the second operation information and/or third operation information, and the third operation information is obtained based on difference information between the second operation information and the first operation information.

8. The method according to any one of claims 1 to 7, wherein the real-world scene is a billiards scene, the target object is a target billiard ball, and the first operation information indicates at least one of the following: a to-be-hit point of a cue on the target billiard ball, a to-be-hit force of the cue for the target billiard ball, and a to-be-hit direction of the cue for the target billiard ball.

9. An AR device, wherein the AR device comprises:
an obtaining module, configured to: obtain a real-world scene and physical information associated with a target object in the real-world scene, and determine first operation information of the target object based on the physical information associated with the target object, wherein the first operation information indicates a physical operation to be performed on the target object; and
a processing module, configured to generate an AR scene based on the real-world scene and the first operation information, wherein the AR scene comprises the first operation information.

10. The AR device according to claim 9, wherein the processing module is specifically configured to:
determine N pieces of expected motion information based on the physical information associated with the target object and N pieces of candidate operation information, wherein the N pieces of candidate operation information are in one-to-one correspondence with the N pieces of expected motion information, and N is a positive integer greater than 1; and
select, from the N pieces of candidate operation information, corresponding candidate operation information of which expected motion information meets a specified condition as the first operation information.

11. The AR device according to claim 10, wherein the specified condition comprises one or more of the following:
an expected score obtained through single motion of the target object performed based on expected motion information is the highest;
an expected location at which the target object stays after completing single motion based on the expected motion information is within a specified space range; and
a quantity of violated motion rules in single motion of the target object performed based on the expected motion information is the smallest.

12. The AR device according to claim 9, wherein the obtaining module is further configured to:
obtain expected motion information input by a user; and
the processing module is further configured to:
determine the first operation information based on the physical information associated with the target object and the expected motion information input by the user.

13. The AR device according to any one of claims 9 to 12, wherein the processing module is specifically configured to:
generate the AR scene based on the real-world scene, the first operation information, and the expected motion information corresponding to the first operation information, wherein the AR scene further comprises the expected motion information corresponding to the first operation information.

14. The AR device according to any one of claims 9 to 13, wherein the physical information associated with the target object comprises at least one of the following: attribute information of the target object, force-bearing information of the target object, and attribute information of an object that the target object expects to touch.

15. The AR device according to any one of claims 9 to 14, wherein the obtaining module is further configured to:
obtain second operation information indicating a physical operation actually performed by the user on the target object; and
the processing module is further configured to:
adjust the AR scene based on the second operation information, wherein the AR scene comprises the second operation information and/or third operation information, and the third operation information is obtained based on difference information between the second operation information and the first operation information.

16. The AR device according to any one of claims 9 to 15, wherein the real-world scene is a billiards scene, the target object is a target billiard ball, and the first operation information indicates at least one of the following: a to-be-hit point of a cue on the target billiard ball, a to-be-hit force of the cue for the target billiard ball, and a to-be-hit direction of the cue for the target billiard ball.

17. A computing device cluster, comprising at least one computing device, wherein each computing device comprises a processor and a storage; and
the processor of the at least one computing device is configured to execute instructions stored in the storage of the at least one computing device, to enable the computing device cluster to perform the method according to any one of claims 1 to 8.

18. A computer program product comprising instructions, wherein when the instructions are run by a computing device cluster, the computing device cluster is enabled to perform the method according to any one of claims 1 to 8.

19. A computer-readable storage medium, comprising computer program instructions, wherein when the computer program instructions are executed by a computing device cluster, the computing device cluster performs the method according to any one of claims 1 to 8.
